# EUROPEAN PATENT SPECIFICATION

(11) **EP 3 552 893 B1**
(45) Date of publication and mention of the grant of the patent: **30.12.2020**
(21) Application number: 18166503.5
(22) Date of filing: 10.04.2018
(51) Int. Cl.: B60S 1/58, B60S 1/52, B60Q 1/30, B60Q 1/00

(54) **A COMBINED REAR EXTERIOR LAMP AND CLEANING SYSTEM FOR CLEANING A REAR WINDOW OF A VEHICLE**
KOMBINIERTE HECKAUSSENLEUCHTE UND REINIGUNGSANLAGE ZUM REINIGEN DER HECKSCHEIBE EINES FAHRZEUGS
LAMPE EXTÉRIEURE ARRIÈRE ET SYSTÈME DE NETTOYAGE COMBINÉS DESTINÉS AU NETTOYAGE D'UNE FENÊTRE ARRIÈRE D'UN VÉHICULE

(43) Date of publication of application: 16.10.2019
(73) Proprietor: Volvo Car Corporation, 40 531 Göteborg (SE)
(72) Inventor: Hasagic, Samir, 41835 Göteborg (SE)
(74) Representative: Kransell & Wennborg KB

(56) References cited:
- DE-A1-102007 033 170
- FR-A1- 3 011 201
- US-A- 6 074 078

## Description

### Field of the Invention

The present invention relates to a combined rear exterior lamp and cleaning system for cleaning a rear window of a vehicle. The present invention also relates to a vehicle comprising a combined rear exterior lamp and cleaning system.

### Background of the Invention

Generally, a cleaning system for cleaning the rear window of a vehicle comprises a nozzle for spraying a washer fluid to the window. The nozzle may for example be integrated in a spoiler or in the vehicle trunk door. The location of the nozzle thus requires holes through e.g. the trunk door or spoiler which increases the risk of fluid leakage into the vehicle.

US6074078 discloses one example of integrating the nozzle into a center high mount stop lamp of a vehicle. According to US6074078, a nozzle is integrated in the lens of the center high mount stop lamp. Thus, a hole is made in the lens through which the nozzle is mounted.

However, the nozzle location suggested by US6074078 still introduces a path for fluid to enter into the lamp through the hole in the lens.

Moreover, the nozzles provided in prior art are generally not efficient in spreading the washer fluid across the window. It would therefore also be desirable to improve the coverage of washer fluid provided for cleaning a rear window of a vehicle.

Accordingly, it appears that rear window cleaning systems for vehicles may be improved in several ways.

### Summary

In view of above, it is an object of the present invention to provide a combined rear exterior lamp and cleaning system for cleaning a rear window of a vehicle which alleviates at least one of the above mentioned problems in prior art.

According to a first aspect of the invention, there is provided a combined rear exterior lamp and cleaning system for cleaning a rear window of a vehicle, the system comprising: a lens for the rear exterior lamp of the vehicle, the lens having an inner surface and an outer surface, the inner surface being adapted to face a light source for the rear exterior lamp; a cleaning arrangement for providing a cleaning fluid to an exterior surface of the rear window, an inlet connectable to a cleaning fluid hose for providing cleaning fluid to the cleaning arrangement, the inlet being arranged on the same side of the lens as the inner surface, wherein the cleaning arrangement comprises a channel and an array of outlets in fluid communication with the channel, the channel being attached to the lens and is adapted to transport the cleaning fluid from the inlet to the array of outlets, wherein the channel is generally parallel to at least one of the lens inner surface or the lens outer surface, wherein the outlets are located on the outer side of the lens on the same side as the outer surface of the lens, the outlets being adapted for providing the cleaning fluid to the rear window of the vehicle.

The present invention is based on the realization that the cleaning arrangement for cleaning of a rear window of a vehicle may be comprised of outlets in the lens of a rear exterior lamp, the outlets being in fluid communication with a channel running along the lens surface. Hereby, the spread of washing fluid to the rear window may be improved. In addition, since the cleaning arrangement is comprised of the channel and the outlets in the lens, the traditional nozzle may be omitted which eliminates the problems related with mounting of the nozzle for proper operation.

The channel may for example be integrated with the lens, or the channel may be attached to the lens as a separate part, or even attached on the outer surface of the lens. The location of the channel and its outlets may in this way provide for improved cleaning of the rear window.

Furthermore, the shape and location of the channel itself may be tailored depending on the design and shape of the window.

Accordingly, advantages with the invention include improved cleaning of the rear window, and eliminated need for a traditional nozzle.

The light source may be mountable in a light source holder arranged in the exterior lamp. The light source holder comprises an arrangement for mechanically holding a light source in place in the headlamp and electrical circuitry for providing electrical power to the light source.

A light source may be for example a halogen light emitting device, a light-emitting diode (LED), or any other suitable light emitting device for vehicle exterior lights.

The inner surface of the lens and the outer surface of the lens may be opposite to each other meaning that the inner surface faces an inside compartment of the rear exterior lamp where the light source holder is located, and the outer surface faces the outside of the compartment, when the lens is arranged in a rear exterior lamp. The outer surface may at least locally face in an opposite direction compared to the inner surface.

The inlet for connecting a cleaning fluid hose to the cleaning arrangement is reachable from the inner side of the lens. Accordingly, when the lens is arranged in a rear exterior lamp, the cleaning fluid hose may be connected to the cleaning arrangement from inside the compartment accommodating the light source holder.

The cleaning arrangement is advantageously made from an optically transmissive material, such as the same material as the lens material. The material of the lens may comprise e.g. a plastic material. Materials for the lens are known *per se* in the art. The lens may be manufactured by e.g. injection molding techniques.

In one possible implementation of the inventive concept, the cleaning arrangement may be embedded in the lens material whereby the channel lies in the lens material and the outlets are formed in the lens material.

Accordingly, the channel and the outlets may be made in one piece with the lens and is in this way fully integrated in the lens. Thus, the cleaning arrangement is in-separable from the lens itself which facilitates mounting of the cleaning arrangement since the cleaning arrangement is already part of the lens itself and is therefore mounted in the rear exterior lamp at the same time as the lens.

In another possible implementation of the inventive concept, the lens may comprise a through-opening from the inner surface to the outer surface, wherein the cleaning arrangement is a releasably attached in the through-opening to seal the through-opening. Thus, the cleaning arrangement may be separable from the lens. However, in use, the cleaning arrangement is mounted in the through-opening with the outlets on the outer side of the lens, i.e. the same side as the outer surface. If needed, the cleaning arrangement may in this possible implementation be replaced or removed for maintenance without removing the lens. The cleaning arrangement may be attached in the through-opening using e.g. screws tightened to the lens material, or by a spring arrangement.

The channel may be arranged along one axis. Accordingly, the channel may be a relatively straight channel. Further the array of outlets may be arranged such that the outlets are distributed from a first end portion to a second end portion of the channel. In this way, improved coverage of washing fluid from the cleaning arrangement is possible.

In some embodiments, the outlets of the array of outlets are evenly spread along the channel.

In other embodiments, the spacing between outlets in a first subset of outlets may be different from the spacing between outlets in a second subset of outlets. For example, it may be advantageous to provide more cleaning fluid to portions of the rear window which are more important to clean than other portions. A central portion of the rear window may for example be of higher importance to be kept clean compared to distal side portions of the window, near the edges of the window. The central portions of the rear window may therefore be cleaned with higher priority with a higher density of outlets. As a further example, some surface portions of the rear window may be more prone to get dirty and may thus be in need of more cleaning fluid whereby a higher density of outlets may advantageously be used for cleaning such outer surface portions.

A longitudinal axis of the outlets from the channel may intercept with the rear window of the vehicle. Accordingly, the outlets may be arranged facing the rear window surface such that washing fluid from the outlets are spayed primarily onto the rear window. The longitudinal axis of the outlets is along the main direction of jet stream of washing fluid from the respective outlet.

The channel is generally parallel with at least one of the lens inner surface or the lens outer surface. Accordingly, the channel is arranged along the shape of at least one of the lens inner surface or the lens outer surface.

In order to provide a relatively large coverage of the outer surface of the window for the washing fluid, the length of the channel is at least about half the side-to-side distance of the outer surface of the lens. In possible embodiments, the channel is arranged from one side portion to another side portion of the lens.

In some embodiments, the channel may comprise at least two channel segments in fluid communication with each other, each channel segment having respective outlets, wherein an axis along one of the channel segments intercepts an axis along another one of the channel segments. The channel may thus comprise at least two segments that are arranged at an angle with respect to each other, the angle being such that the cleaning fluid flow changes direction at the interception between the segments. Hereby, it is advantageously possible to angle the outlets towards specifically targeted portions of the outer surface of the rear window, to thereby improve the coverage of cleaning fluid.

The cleaning system may comprise a hose and a cleaning fluid container, wherein the hose is connectable to the inlet for providing a cleaning fluid to the inlet from the cleaning fluid container arranged for holding a reservoir of cleaning fluid.

The rear exterior lamp may comprise a housing for accommodating the light source holder, wherein the lens is adapted to seal an opening in the housing. Thus, the lens is arranged such that light emitted by a light source arranged in the light source holder in the housing is transmitted through the lens.

The rear exterior lamp is preferably arrangeable above the rear window of the vehicle. The rear exterior lamp may for instance be a center high mount stop lamp.

According to a second aspect of the inventive concept, there is provided a vehicle comprising a combined rear exterior lamp and cleaning system.

This second aspect of the invention provides similar advantages as discussed above in relation to the previous aspect of the invention.

Further features of, and advantages with, the present invention will become apparent when studying the appended claims and the following description. The skilled person realizse that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 schematically illustrates a vehicle comprising a combined rear exterior lamp and cleaning system;
Figs. 2A-B show conceptual views of example embodiments of the invention;
Fig. 3 is a conceptual view of an example embodiment of the invention;
Figs. 4A-B show conceptual views of example embodiments of the invention;
Fig. 5 is a conceptual view of an example embodiment of the invention;
Fig. 6 is a conceptual view of an example embodiment of the invention; and
Fig. 7 illustrates a configuration of the outlets with respect to the rear window of a vehicle.

### Detailed Description of Example Embodiments

In the present detailed description, various embodiments of inventive concept are mainly described with reference to a vehicle in the form of a car. However, the present invention may equally be used for any other type vehicle such as e.g. a bus, a truck, etc. This invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

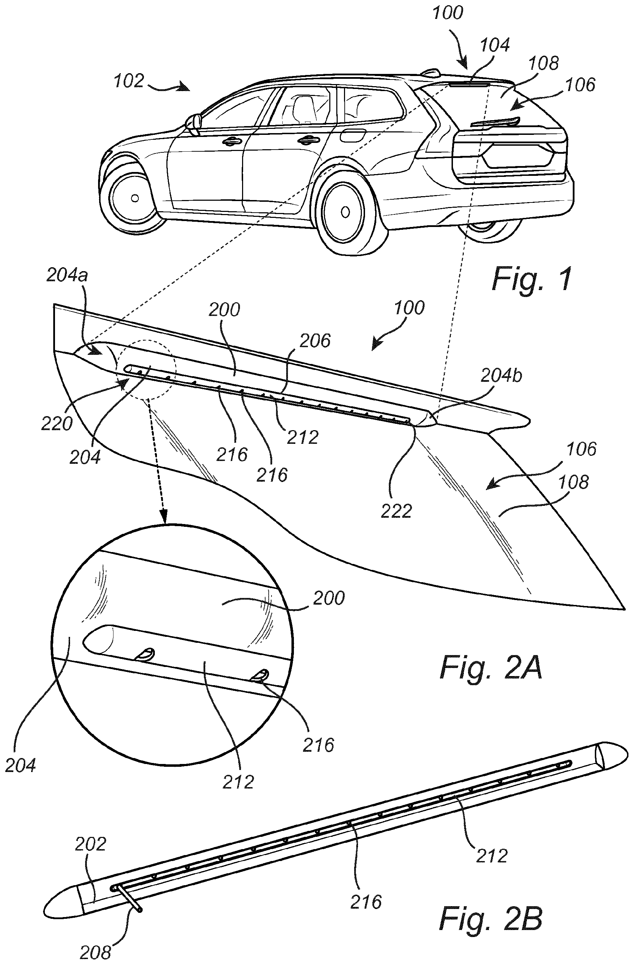

Fig. 1 shows a vehicle in the form of a car 102. The car 102 comprises a rear exterior lamp 104 arranged to provide illumination to the rear side of the car 102. The rear exterior lamp 104 is generally in communication with a vehicle electrical system such that an operator of the car 102 may control the lighting state of the rear exterior lamp 104. For example, such lighting state may be a brake light signal activated by a braking action by the operator of the car 102. The brake light signal provides an indication for drivers of vehicles or pedestrians behind the car 102 that a braking action has been initiated. In this exemplary embodiment, the rear exterior lamp 104 is arranged above the rear window 106 of the car 102. The rear exterior lamp 104 is shown as a center high mount stop lamp.

The rear exterior lamp 104 comprises a lens (not numbered in fig. 1, better seen in e.g. figs. 2A-B) having an outer surface facing outside of the rear exterior lamp 104. The lens comprises a cleaning arrangement for providing a cleaning fluid to the rear window 106 of the car 102. The cleaning arrangement and the lens will be described further with reference to subsequence drawings.

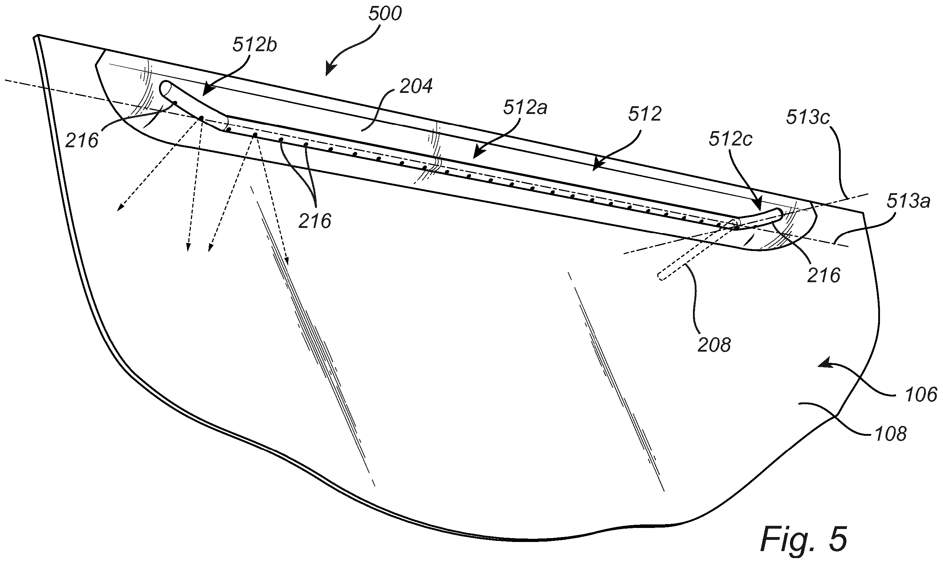

The car 102 comprises a cleaning fluid container (not shown) for holding cleaning fluid for the cleaning arrangement. Further, a cleaning fluid hose (not shown) is arranged to transfer the cleaning fluid from the cleaning fluid container to an inlet (not shown in fig. 1, see e.g. fig. 2B and fig. 5) of the cleaning arrangement. The cleaning fluid is transferred from the cleaning fluid container to the cleaning fluid arrangement via the hose by e.g. pressurizing the cleaning fluid in the cleaning fluid container, or by any other means known in the art.

Fig. 2A conceptually illustrates a close-up view of the combined rear exterior lamp and cleaning system 100 according to embodiments of the inventive concept, and Fig. 2B illustrates the inner side of the lens 200 for the rear exterior lamp 104. Fig. 2A will now be described in conjunction with fig. 2B.

The combined rear exterior lamp and cleaning system 100 comprises the lens 200 which is adapted for the rear exterior lamp 104 of the vehicle 102. The lens 200 has an inner surface 202 (fig. 2B) facing a light source (not shown) when mounted in the rear exterior lamp 104, and an outer surface 204 facing outside of the rear exterior lamp 104. At least locally, a normal axis to the inner surface 202 may face in a direction opposite a normal axis to the outer surface 204.

For cleaning of the rear window 106 of the car 102, the lens 200 comprises a cleaning arrangement 206. The cleaning arrangement 206 is adapted for providing a cleaning fluid to an exterior surface 108 of the rear window 106. For this purpose, a channel 212 of the cleaning arrangement is integrated with the lens 200 in the presently described example embodiment. The channel 212 is in fluid communication with outlets 216 located on the outer side of the lens 200 on the same side as the outer surface 204 of the lens. Cleaning fluid may be transferred by the channel 212 to the outlets 216 for distributing the cleaning fluid to the exterior surface 108 of the rear window 106 of the car 102.

In the example embodiment illustrated in figs. 2A-B, the channel 212 and the outlets 216 are made in the same piece as the lens 200. In other words, the channel 212 runs through the material of the lens 200 and the outlets 216 are formed in the lens material. The cleaning arrangement 206 is in this way embedded and thus fully integrated with the lens 200. In this example embodiment shown in figs. 2A-B, the channel 212 is arranged along a generally horizontal axis, when mounted on a vehicle for use.

The cleaning fluid is provided to the cleaning arrangement 206 at an inlet 208. The inlet 208 is adapted to receive a cleaning fluid hose (not shown) which is configured to transfer the cleaning fluid to the cleaning arrangement 206 from a cleaning fluid container (not shown). The inlet 208 is located on the same side of the lens as the inner surface 202. In other words, the inlet 208 is arranged facing the inside of a compartment of the rear exterior lamp 104. It is in the compartment that the light sources are mounted when the rear exterior lamp 104 is in place for use in a vehicle.

The channel 212 is generally parallel with at least one of the inner surface 202 or the outer surface 204. In other words, the channel is configured to transport cleaning fluid in a direction generally parallel with the outer surface 204 or the inner surface 202, or even in a direction generally parallel with the outer surface 204 and the inner surface 202, or at least parallel with local regions of the outer surface 204 and/or the inner surface 202.

The channel 212 may be arranged in a direction generally parallel with a side-to-side direction of the outer surface 204 of the lens 200. The side-to-side direction is from a first side 204a to a second side 204b of the lens outer surface 204.

The array of outlets 216 are distributed from a first end portion 220 of the channel 212, to a second end portion 222 of the channel 212. The outlets 216 may be evenly spread along the channel 212, i.e. spaced apart from each other at the same distance across the array of outlets 216.

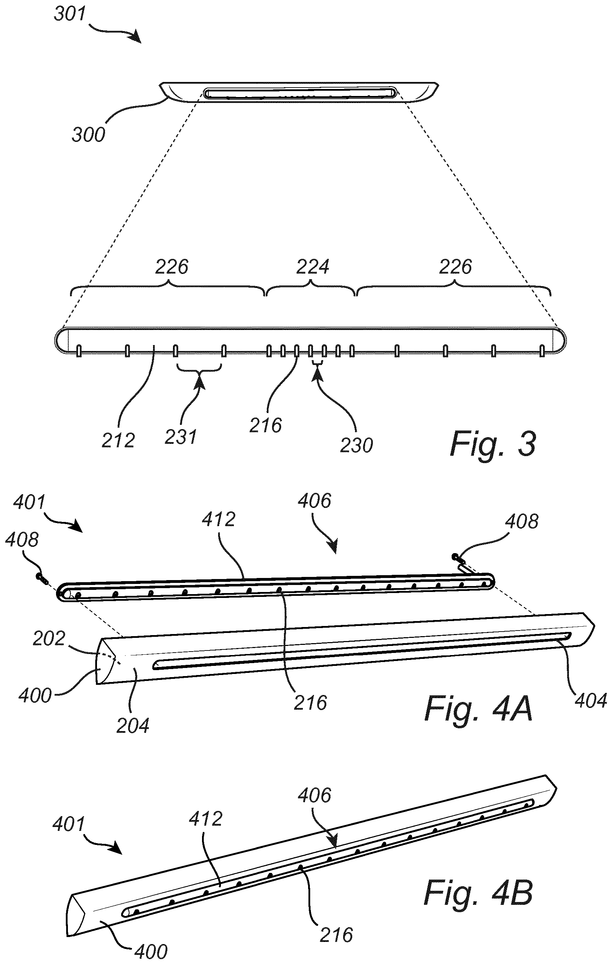

However, in further possible implementations the spacing between outlets 216 may vary across the array of outlets 216, as illustrated in fig. 3. For example, there may be portions of the outer surface of the rear window 106 that requires higher priority cleaning than other surface portions. The outlets arranged to provide cleaning fluid to the higher priority portions may be more closely spaced apart.

In the example embodiment illustrated in fig. 3, the spacing 230 between the outlets 216 (only one is numbered) in a subset 224 of outlets 216 is smaller than the spacing 231 between outlets 216 in another subset 226 of outlets. The outlets in the subset 224 with the smaller inter-spacing are arranged closer to the center of the channel 212 which in this example embodiment is closer to the center of the lens 300 of the combined rear exterior lamp and cleaning system 301. The surface portion of the rear window 106 exterior surface 108 located near the center of the channel 212 may thus be in more need of cleaning than other portions of the rear window 106 exterior surface 108. For instance, the center portion of the rear window may be higher prioritized with regards to maintaining the window clean for sufficient visibility for the driver.

Figs. 4A-B schematically illustrate two views of a further embodiment in accordance with the inventive concept. In figs. 4A-B, there is shown a lens 400 for the rear exterior lamp 104 of a combined rear exterior lamp and cleaning system 401 for a vehicle. The lens 400 has a through-opening 404 through the lens 400. The through-opening 404 is between the inner surface 202 to the outer surface 204 of the lens 400. Features in figs. 4A-B with reference numerals that are the same as in figs. 2 and 3 will not be described again, instead refer to the description of figs. 2A-B and fig. 3.

The cleaning arrangement 406 shown in figs. 4A-B comprises a channel 412 and the array of outlets 216 as described with reference to Figs.2A-B and 3. However, in the example embodiment of Figs. 4A-B, the cleaning arrangement 406 is provided as a separate part and is releasably attached to the lens 400 in the through-opening 404. The cleaning arrangement 406 is here shown to be attached to the lens 400 by means of screws 408; however, other means of attachment such as springs or bayonet mount are possible and within the scope of the invention. In fig. 4B, the cleaning arrangement 216 is shown mounted in the through-hole 404 in the lens 400.

In figs. 2A-B, 3, and 4A-B, the channel 212, 412 of the cleaning arrangement 206, 406 is illustrated as a single straight segment. However, the channel may in other possible implementations comprise more than one segment having the array of outlets 216 arranged in each of the segments.

Fig. 5 illustrates a lens 500 for a rear exterior lamp of a vehicle comprising a channel 512 having three segments 512a, 512b, and 512c. The segments 512a-c are in fluid communication with each other. Thus, cleaning fluid provided to the inlet 208 is transported by the segment 512c to the segment 512a and 512b. The cleaning fluid is distributed by the outlets 216 in each of the segments 512a-c to the outer surface 204 of the rear window 106. Further, the segments are arranged at an angle with respect to each other; in other words, an axis 513a along one of the channel segments 512a intercepts an axis 513c along another one 512c of the channel segments.

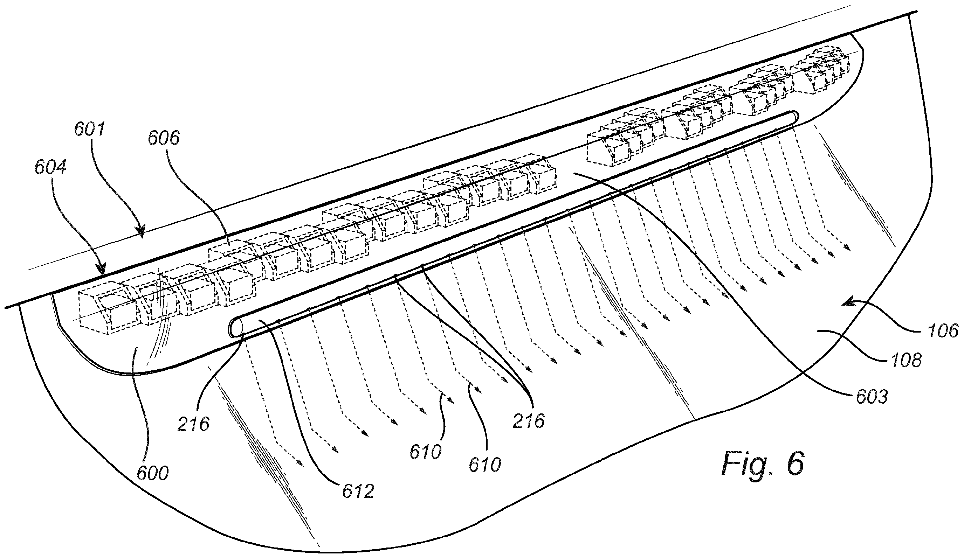

Fig. 6 conceptually illustrates combined rear exterior lamp and cleaning system 600 which may comprise a lens according to any one of the described embodiments. However, here in this example embodiment, the lens 600 is conceptually illustrated as the lens 200 or 400 for example purposes.

The combined rear exterior lamp and cleaning system 601 comprises a housing 604 accommodating a light source holder 606. An inner surface of the lens 600 faces the light source holder 606. The lens 600 further has an outer surface 603. A hose (not shown) inside the combined rear exterior lamp and cleaning system 600 provides a cleaning fluid to the cleaning arrangement of the lens 600 from a cleaning fluid container (not shown). Jets 610 of cleaning fluid are shown in fig. 6 for illustrative purposes.

The cleaning fluid may be pressurized and is thus forced through the cleaning fluid hose to the cleaning arrangement channel 612. The cleaning fluid is thereby sprayed out from the outlets 216 (not all are numbered) as jets 610 of cleaning fluid for distributing the cleaning fluid on the exterior surface 108 of the rear window 106 of a vehicle.

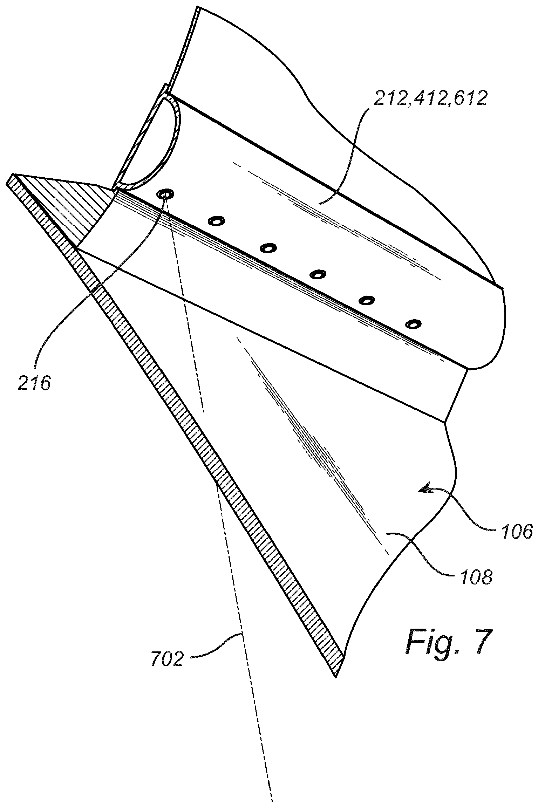

In order for the cleaning fluid to more easily be distributed on the exterior surface 108 of the rear window, it is advantageous for the outlets to be pointing towards the exterior surface 108 of the rear window 106, as is conceptually illustrated in Fig. 7. Thus, a longitudinal axis 702 of the outlets 216 from the channel 212 intercepts with the rear window 106 of the vehicle, such that a jet of cleaning fluid from the outlets 216 are directed towards the rear window 106.

The material of the lens may comprise e.g. a plastic material. Materials for the lens are known *per se* in the art.

The material of the housing may comprise e.g. plastic or metallic materials, known *per se* in the art.

The person skilled in the art realizes that the present invention by no means is limited to the preferred embodiments described above. On the contrary, many modifications and variations are possible within the scope of the appended claims. For example, the lens may comprise several (i.e. more than one) channels having associated inlets and outlets.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A combined rear exterior lamp and cleaning system (100) for cleaning a rear window of a vehicle (102), the system comprising:
- a lens (200;400;600) for the rear exterior lamp (104) of the vehicle, the lens having an inner surface (202) and an outer surface (204), the inner surface being adapted to face a light source for the rear lamp;
- a cleaning arrangement (206;406) for providing a cleaning fluid to an exterior surface of the rear window,
- an inlet (208) connectable to a cleaning fluid hose for providing cleaning fluid to the cleaning arrangement, the inlet being arranged on the same side of the lens as the inner surface,
**characterised in that** the cleaning arrangement comprises a channel (212;412;512;612) and an array of outlets (216) in fluid communication with the channel, the channel being attached to the lens and is adapted to transport the cleaning fluid from the inlet to the array of outlets, wherein the channel is generally parallel to at least one of the lens inner surface or the lens outer surface, wherein the outlets are located on the outer side of the lens on the same side as the outer surface of the lens, the outlets being adapted for providing the cleaning fluid to the rear window of the vehicle.

2. The combined rear exterior lamp and cleaning system according to claim 1, wherein the cleaning arrangement (206) is embedded in the lens material whereby the channel lies in the lens material and the outlets are formed in the lens material.

3. The combined rear exterior lamp and cleaning system according to claim 1, wherein the lens (400) comprises a through-opening (404) from the inner surface to the outer surface, wherein the cleaning arrangement (406) is releasably attached in the through-opening to seal the through-opening.

4. The combined rear exterior lamp and cleaning system according to any one of the preceding claims, wherein the array of outlets is distributed from a first end portion (220) to a second end portion (222) of the channel.

5. The combined rear exterior lamp and cleaning system according to any one of the preceding claims, wherein the outlets of the array of outlets are evenly spread along the channel.

6. The combined rear exterior lamp and cleaning system according to any one of claims 1 to 4, wherein the spacing (230) between outlets (224) in a first subset of outlets is different from the spacing (231) between outlets (226) in a second subset of outlets.

7. The combined rear exterior lamp and cleaning system according to any one of the preceding claims, wherein a longitudinal axis of the outlets from the channel intercepts with the rear window of the vehicle.

8. The combined rear exterior lamp and cleaning system according to any one of the preceding claims, wherein the length of the channel is at least half the side-to-side distance of the outer surface of the lens.

9. The combined rear exterior lamp and cleaning system according to any one of the preceding claims, wherein the channel comprises at least two segments (512a, 512b, 512c) in fluid communication with each other, each segment having respective outlets, wherein an axis along one of the channel segments intercepts an axis along another one of the channel segments.

10. The combined rear exterior lamp and cleaning system according to any one of the preceding claims, wherein the rear exterior lamp comprises a housing for accommodating a light source holder, wherein the lens is adapted to seal an opening in the housing.

11. The combined rear exterior lamp and cleaning system according to any one of the preceding claims, comprising a hose and a cleaning fluid container, wherein the hose is connectable to the inlet for providing a cleaning fluid to the inlet from the cleaning fluid container arranged for holding a reservoir of cleaning fluid.

12. The combined rear exterior lamp and cleaning system according to any one of the preceding claims, wherein the rear exterior lamp is arrangeable above the rear window.

13. The combined rear exterior lamp and cleaning system according to any one of the preceding claims, wherein the rear exterior lamp is a center high mount stop lamp.

14. A vehicle (102) comprising a combined rear exterior lamp and cleaning system according to any one of the preceding claims.

## Patentansprüche

1. Kombiniertes Heckaußenleuchten- und Reinigungssystem (100) zum Reinigen eines Heckfensters eines Fahrzeugs (102), wobei das System Folgendes umfasst:
- eine Linse (200,400,600) für die Heckaußenleuchte (104) des Fahrzeugs, wobei die Linse eine Innenoberfläche (202) und eine Außenoberfläche (204) aufweist, wobei die Innenoberfläche dafür eingerichtet ist, zu einer Lichtquelle für die Heckleuchte zu weisen,
- eine Reinigungsanordnung (206,406) zum Bereitstellen eines Reinigungsfluids für eine Außenoberfläche des Heckfensters,
- einen Einlass (208), der mit einem Reinigungsfluidschlauch verbindbar ist, zum Bereitstellen von Reinigungsfluid für die Reinigungsanordnung, wobei der Einlass auf derselben Seite der Linse angeordnet ist wie die Innenoberfläche,
**dadurch gekennzeichnet, dass**
die Reinigungsanordnung einen Kanal (212,412,512,612) und eine Matrix von Auslässen (216) in Fluidkommunikation mit dem Kanal umfasst, wobei der Kanal an der Linse angebracht ist und dafür eingerichtet ist, das Reinigungsfluid von dem Einlass zu der Matrix von Auslässen zu transportieren, wobei der Kanal allgemein parallel zu mindestens einer von der Linseninnenoberfläche und der Linsenaußenoberfläche liegt, wobei die Auslässe sich an der Außenseite der Linse auf derselben Seite wie die Außenoberfläche der Linse befinden, wobei die Auslässe zum Bereitstellen des Reinigungsfluids für das Heckfenster des Fahrzeugs eingerichtet sind.

2. Kombiniertes Heckaußenleuchten- und Reinigungssystem nach Anspruch 1, wobei die Reinigungsanordnung (206) in das Linsenmaterial eingebettet ist, wodurch der Kanal in dem Linsenmaterial liegt und die Auslässe in dem Linsenmaterial gebildet sind.

3. Kombiniertes Heckaußenleuchten- und Reinigungssystem nach Anspruch 1, wobei die Linse (400) eine Durchgangsöffnung (404) von der Innenoberfläche zu der Außenoberfläche umfasst, wobei die Reinigungsanordnung (406) lösbar in der Durchgangsöffnung angebracht ist, um die Durchgangsöffnung dicht zu verschließen.

4. Kombiniertes Heckaußenleuchten- und Reinigungssystem nach einem der vorhergehenden Ansprüche, wobei die Matrix von Auslässen von einem ersten Endabschnitt (220) zu einem zweiten Endabschnitt (222) des Kanals verteilt ist.

5. Kombiniertes Heckaußenleuchten- und Reinigungssystem nach einem der vorhergehenden Ansprüche, wobei die Auslässe der Matrix von Auslässen gleichmäßig entlang des Kanals verteilt sind.

6. Kombiniertes Heckaußenleuchten- und Reinigungssystem nach einem der Ansprüche 1 bis 4, wobei der Abstand (230) zwischen Auslässen (224) in einer ersten Teilmenge von Auslässen sich von dem Abstand (231) zwischen Auslässen (226) in einer zweiten Teilmenge von Auslässen unterscheidet.

7. Kombiniertes Heckaußenleuchten- und Reinigungssystem nach einem der vorhergehenden Ansprüche, wobei eine Längsachse der Auslässe aus dem Kanal das Heckfenster des Fahrzeugs schneidet.

8. Kombiniertes Heckaußenleuchten- und Reinigungssystem nach einem der vorhergehenden Ansprüche, wobei die Länge des Kanals mindestens die Hälfte der Entfernung von Seite zu Seite der Außenoberfläche der Linse beträgt.

9. Kombiniertes Heckaußenleuchten- und Reinigungssystem nach einem der vorhergehenden Ansprüche, wobei der Kanal mindestens zwei Segmente (512a,512b,512c) in Fluidkommunikation miteinander umfasst, wobei jedes Segment jeweilige Auslässe aufweist, wobei eine Achse entlang eines der Kanalsegmente eine Achse entlang eines anderen der Kanalsegmente schneidet.

10. Kombiniertes Heckaußenleuchten- und Reinigungssystem nach einem der vorhergehenden Ansprüche, wobei die Heckaußenleuchte ein Gehäuse zum Unterbringen eines Lichtquellenhalters umfasst, wobei die Linse dafür eingerichtet ist, eine Öffnung in dem Gehäuse dicht zu verschließen.

11. Kombiniertes Heckaußenleuchten- und Reinigungssystem nach einem der vorhergehenden Ansprüche, einen Schlauch und einen Reinigungsfluidbehälter umfassend, wobei der Schlauch mit dem Einlass verbindbar ist, zum Bereitstellen eines Reinigungsfluids für den Einlass aus dem Reinigungsfluidbehälter, der zum Aufbewahren eines Reservoirs von Reinigungsfluid angeordnete ist.

12. Kombiniertes Heckaußenleuchten- und Reinigungssystem nach einem der vorhergehenden Ansprüche, wobei die Heckaußenleuchte oberhalb des Heckfensters anordnungsfähig ist.

13. Kombiniertes Heckaußenleuchten- und Reinigungssystem nach einem der vorhergehenden Ansprüche, wobei die Heckaußenleuchte eine dritte Bremsleuchte (Center High Mount Stop Lamp) ist.

14. Fahrzeug (102), ein kombiniertes Heckaußenleuchten- und Reinigungssystem nach einem der vorhergehenden Ansprüche umfassend.

## Revendications

1. Système (100) de nettoyage combinant un feu extérieur arrière pour nettoyer une lunette arrière d'un véhicule (102), le système comprenant :
- une lentille (200 ; 400 ; 600) pour le feu extérieur arrière (104) du véhicule, la lentille présentant une surface intérieure (202) et une surface extérieure (204), la surface intérieure étant adaptée à faire face à une source lumineuse pour le feu arrière ;
- un agencement de nettoyage (206 ; 406) pour fournir un fluide de nettoyage à une surface extérieure de la lunette arrière,
- une entrée (208) raccordable à un flexible à fluide de nettoyage pour fournir du fluide de nettoyage à l'agencement de nettoyage, l'entrée étant agencée du même côté de la lentille que la surface intérieure,
**caractérisé en ce que**
l'agencement de nettoyage comprend un canal (212 ; 412 ; 512 ; 612) et un réseau de sorties (216) en communication fluidique avec le canal, le canal étant fixé à la lentille et étant adapté à acheminer le fluide de nettoyage depuis l'entrée jusqu'au réseau de sorties, le canal étant généralement parallèle à la surface intérieure de la lentille et/ou à la surface extérieure de la lentille, les sorties étant situées du côté extérieur de la lentille du même côté que la surface extérieure de la lentille, les sorties étant adaptées à fournir le fluide de nettoyage à la lunette arrière du véhicule.

2. Système de nettoyage combinant un feu extérieur arrière selon la revendication 1, dans lequel l'agencement de nettoyage (206) est noyé dans le matériau de la lentille si bien que le canal se trouve dans le matériau de la lentille et les sorties sont ménagées dans le matériau de la lentille.

3. Système de nettoyage combinant un feu extérieur arrière selon la revendication 1, dans lequel la lentille (400) comprend une ouverture traversante (404) depuis la surface intérieure jusqu'à la surface extérieure, l'agencement de nettoyage (406) étant fixé amovible dans l'ouverture traversante afin d'obturer hermétiquement l'ouverture traversante.

4. Système de nettoyage combinant un feu extérieur arrière selon l'une quelconque des revendications précédentes, dans lequel le réseau de sorties est distribué depuis une première partie extrémité (220) jusqu'à une deuxième partie extrémité (222) du canal.

5. Système de nettoyage combinant un feu extérieur arrière selon l'une quelconque des revendications précédentes, dans lequel les sorties du réseau de sorties se répartissent uniformément le long du canal.

6. Système de nettoyage combinant un feu extérieur arrière selon l'une quelconque des revendications 1 à 4, dans lequel l'espacement (230) entre des sorties (224) dans un premier sous-ensemble de sorties est différent de l'espacement (231) entre des sorties (226) dans un deuxième sous-ensemble de sorties.

7. Système de nettoyage combinant un feu extérieur arrière selon l'une quelconque des revendications précédentes, dans lequel un axe longitudinal des sorties du canal coupe la lunette arrière du véhicule.

8. Système de nettoyage combinant un feu extérieur arrière selon l'une quelconque des revendications précédentes, dans lequel la longueur du canal est au moins la moitié de la distance de part en part de la surface extérieure de la lentille.

9. Système de nettoyage combinant un feu extérieur arrière selon l'une quelconque des revendications précédentes, dans lequel le canal comprend au moins deux segments (512a, 512b, 512c) en communication fluidique entre eux, chaque segment présentant des sorties respectives, un axe suivant l'un des segments du canal coupant un axe suivant un autre des segments du canal.

10. Système de nettoyage combinant un feu extérieur arrière selon l'une quelconque des revendications précédentes, dans lequel le feu extérieur arrière comprend un boîtier pour accueillir un support de source lumineuse, la lentille étant adaptée à obturer hermétiquement une ouverture dans le boîtier.

11. Système de nettoyage combinant un feu extérieur arrière selon l'une quelconque des revendications précédentes, comprenant un flexible et un contenant de fluide de nettoyage, le flexible étant raccordable à l'entrée pour fournir un fluide de nettoyage à l'entrée à partir du contenant de fluide de nettoyage ménagé pour renfermer une réserve de fluide de nettoyage.

12. Système de nettoyage combinant un feu extérieur arrière selon l'une quelconque des revendications précédentes, dans lequel le feu extérieur arrière est susceptible d'être agencé au-dessus de la lunette arrière.

13. Système de nettoyage combinant un feu extérieur arrière selon l'une quelconque des revendications précédentes, dans lequel le feu extérieur arrière est un feu stop central surélevé.

14. Véhicule (102) comprenant un système de nettoyage combinant un feu extérieur arrière selon l'une quelconque des revendications précédentes.
